# EUROPÄISCHE PATENTSCHRIFT

(11) **EP 0 475 904 B1**
(45) Veröffentlichungstag und Bekanntmachung des Hinweises auf die Patenterteilung: **15.01.1997**
(21) Anmeldenummer: 91810708.7
(22) Anmeldetag: 04.09.1991
(51) Int. Cl.: C07D 279/00, C08K 5/46, C10M 135/36

(54) **Stoffgemische und Zusammensetzungen enthaltend Phenothiazine**
Mixtures and compositions containing phenothiazines
Mélanges et compositions contenant des phénothiazines

(30) Priorität: 13.09.1990 CH 2972/90
(43) Veröffentlichungstag der Anmeldung: 18.03.1992
(73) Patentinhaber: Ciba SC Holding AG, 4057 Basel (CH)
(72) Erfinder: Evans, Samuel, Dr., CH-1723 Marly (CH)

(56) Entgegenhaltungen:
- EP-A- 0 149 422
- EP-A- 0 356 677
- GB-A- 1 090 688
- US-A- 3 468 798

## Beschreibung

Die Erfindung betrifft Phenothiazine enthaltende Stoffgemische, Zusammensetzungen enthaltend diese Stoffgemische, sowie die Herstellung dieser Stoffgemische und deren Verwendung als Antioxidantien in organischen, einem oxidativen, thermischen oder actinischen Abbau unterworfenen Materialien.
Es ist bekannt, aus Diphenylamin, durch Reaktion mit Schwefel Phenothiazin herzustellen (US-PS 2 433 658). Aus der US-PS 2 587 662 ist es bekannt, aus 4-Isopropoxydiphenylamin mit Schwefel das entsprechende 3-Isopropoxyphenothiazin herzustellen. Dieses Produkt wird als Antioxidans beispielsweise für Schmieröle mineralischer und synthetischer Art beschrieben.

Aus der GB-PS 1 090 688 ist bekannt geworden, dass dialkylierte Diphenylamine und Phenothiazine und synergistische Kombinationen davon als Antioxidantien in synthetischen Schmierstoffen geeignet sind. Es werden im weiteren monoalkylierte Phenothiazine beschrieben, die auch bei erhöhten Temperaturen als Antioxidantien in synthetischen Schmierstoffen wirksam sind.

In der GB-PS 1 140 089 werden eine Reihe von 1-t-Butyl-3,7-dialkylphenothiazinen als Antioxidantien für synthetische Schmierstoffe und polymere Harze beschrieben.

Aus der GB-PS 1 347 141 sind weitere Phenothiazine bekannt, die in 3- und 7-Stellung und gegebenenfalls in 1-Stellung mit einer Aralkylgruppe substituiert sind. Diese Phenothiazine können in Mischung mit alkylierten Aminen, beispielsweise mit Dioctyldiphenylamin oder Dioctylphenothiazinen, in Schmierstoffen Anwendung finden.

Es wurde nun ein neues Phenothiazine enthaltendes Stoffgemisch und neue Zusammensetzungen, enthaltend dieses Stoffgemisch, und deren überraschend weiter verbesserte Eigenschaften gegenüber bekannten Produkten, gefunden. Weiters wurde ein Verfahren zur Herstellung dieser Stoffgemische gefunden.

Die vorliegende Erfindung betrifft ein Phenothiazine enthaltendes Stoffgemisch erhältlich durch Umsetzung eines Gemisches von Diphenylamin-Verbindungen, wobei das Diphenylamin-Gemisch
- 1 bis 5 Gew.-%: a) Diphenylamin
- 8 bis 18 Gew.-%: b) 4-tert-Butyldiphenylamin
- 21 bis 31 Gew.-%: c) einer oder mehrerer der Verbindungen
i) 4-tert-Octyldiphenylamin
ii) 4,4'-Di-tert-butyldiphenylamin
iii) 2,4,4'-Tris-tert-butyldiphenylamin,
- 20 bis 31 Gew.-%: d) einer oder mehrerer der Verbindungen
i) 4-tert-Butyl-4'-tert-octyldiphenylamin
ii) 2,2'- oder 2,4'-Di-tert-octyldiphenylamin
iii) 2,4-Di-tert-butyl-4'-tert-octyldiphenylamin und
- 15 bis 29 Gew.-%: e) der Verbindung
i) 4,4'-Di-tert-octyldiphenylamin oder der Verbindungen
i) 4,4'-Di-tert-octyldiphenylamin und
ii) 2,4-Di-tert-octyl-4'-tert-butyldiphenylamin
enthält,
mit 1 bis 200 Mol-% elementarem Schwefel, in Gegenwart von 0,25 bis 5 Mol-% eines Kondensations-Katalysators aus der Reihe von Jod, Aluminiumbromid, Aluminiumchlorid, Eisen-III-chlorid, Antimonchlorid, Kupferjodid oder Schwefeljodid, bei Temperaturen von 80° bis 250°C.

In vorliegender Erfindungsbeschreibung beziehen sich alle Angaben in Mol-% auf die Menge in Mol des jeweils eingesetzten Diphenylamin-Gemisches.

Die Zusammensetzung des Diphenylamin-Gemisches ist durch seine Herstellung (Umsetzung von Diphenylamin mit Diisobutylen) bestimmt, die weiter unten beschrieben wird. In den Fraktionen c), d) und e) sind jeweils die mit i) bezeichneten Verbindungen die Hauptkomponenten.

In Abhängigkeit von der Schwefelmenge sind Stoffgemische herstellbar, die wenig Phenothiazine (geringe S-Menge) oder einen hohen Steil an Phenothiazinen (grosse S-Menge) enthalten.

Die Erfindung betrifft ferner ein Phenothiazine enthaltendes Stoffgemisch, erhältlich durch Reaktion von Diphenylamin mit Diisobutylen, wobei die Reaktion von Diphenylamin mit einem Ueberschuss an Diisobutylen in Anwesenheit eines aktiven Tonerdekatalysators durchgeführt wird, die Konzentration an Diisobutylen über die Reaktionsdauer im wesentlichen konstant gehalten wird, die Reaktionstemperatur mindestens 160°C beträgt, die Reaktion solange durchgeführt wird bis der Gehalt an 4,4′-Ditert.-octyldipyhenylamin, bezogen auf die Reaktionsmasse ohne Katalysator, unter 30 Gew.-%, vorzugsweise unter 25 Gew.-% und der Gehalt an Diphenylamin unter 10 Gew.-%, vorzugsweise unter 5 Gew.-% liegen, der Katalysator und nicht umgesetztes Diisobutylen entfernt werden und das entstehende flüssige Produkt isoliert wird und anschliessendes Umsetzen des flüssigen Produktes mit 1 bis 200 Mol-% elementarem Schwefel, in Gegenwart von 0,25 bis 5 Mol-% eines Kondensationskatalysators aus der Reihe Jod, Aluminiumbromid, Aluminiumchlorid, Eisen-III-chlorid, Antimonchlorid, Kupferjodid oder Schwefeljodid, bei Temperaturen von 80° bis 250°C.

Ein zweckmässiges Phenothiazine enthaltendes Stoffgemisch ist durch Umsetzung mit 5 bis 200, insbesondere 5 bis 150 Mol-% elementarem Schwefel herzustellen.

Eine weitere zweckmässige Form des Phenothiazine enthaltenden Stoffgemisches, wie oben beschrieben, ist durch Umsetzung mit 150 bis 200, insbesondere 180 bis 200 Mol-% elementarem Schwefel herstellbar.

Dieses letztere Stoffgemisch enthält im wesentlichen oder ausschliesslich nur noch Phenothiazine, während die Diphenylamine mehrheitlich oder vollständig umgesetzt sind.

Ein bevorzugtes Phenothiazine enthaltendes Stoffgemisch ist durch Umsetzung mit 5 bis 100, z.B. 50 bis 100, Mol-% elementarem Schwefel herstellbar.

Ein anderes bevorzugtes Phenothiazine enthaltendes Stoffgemisch ist herstellbar durch Umsetzung mit 20 Mol-% elementarem Schwefel.

In einem bevorzugten Phenothiazine enthaltenden Stoffgemisch beträgt die Summe der Phenothiazine 10 bis 20 Gew.-% und die Summe der Diphenylamine 80 bis 90 Gew.-%, bezogen auf 100 Gew.-% für das gesamte Stoffgemisch.

Das erfindungsgemässe, Phenothiazine enthaltende Stoffgemisch kann derart hergestellt werden, dass ein Gemisch von Diphenylamin-Verbindungen, wobei das Diphenylamin-Gemisch
- 1 bis 5 Gew.-%: a) Diphenylamin
- 8 bis 18 Gew.-%: b) 4-tert-Butyldiphenylamin
- 21 bis 31 Gew.-%: c) einer oder mehrerer der Verbindungen
i) 4-tert-Octyldiphenylamin
ii) 4,4'-Di-tert-butyldiphenylamin
iii) 2,4,4'-Tris-tert-butyldiphenylamin,
- 20 bis 31 Gew.-%: d) einer oder mehrerer der Verbindungen
i) 4-tert-Butyl-4'-tert-octyldiphenylamin
ii) 2,2'-oder 2,4'-Di-tert-octyldiphenylamin
iii) 2,4-Di-tert-butyl-4'-tert-octyldiphenylamin und
- 15 bis 29 Gew.-%: e) der Verbindung
i) 4,4'-Di-tert-octyldiphenylamin oder der Verbindungen
i) 4,4'-Di-tert-octyldiphenylamin und
ii) 2,4-Di-tert-octyl-4'-tert-butyldiphenylamin
enthält,
mit 1 bis 200 Mol-% elementarem Schwefel, in Gegenwart von 0,25 bis 5 Mol-% eines Kondensations-Katalysators aus der Reihe von Jod, Aluminiumbromid, Aluminiumchlorid, Eisen-III-chlorid, Antimonchlorid, Kupferjodid oder Schwefeljodid, bei Temperaturen von 80° bis 250°C umgesetzt wird.

In zweckmässiger Ausführungsform des Verfahrens wird die Umsetzung mit 5 bis 200, insbesondere 5 bis 150 Mol-% elementarem Schwefel ausgeführt.

In anderer zweckmässiger Ausführungsform des Verfahrens wird die Umsetzung mit 150 bis 200, insbesondere 180 bis 200 Mol-% elementarem Schwefel ausgeführt.

Bevorzugt wird ein Verfahren, bei dem die Umsetzung mit 5 bis 100, z.B. 50-100, Mol-% elementarem Schwefel ausgeführt wird.

Ein weiteres bevorzugtes Verfahren ist dadurch gekennzeichnet, dass die Umsetzung mit 20 Mol-% elementarem Schwefel ausgeführt wird.

Zu den zweckmässigen Ausführungsformen des Verfahrens gehört auch, dass die Umsetzung in Gegenwart von 0,5-2 Mol-% und vorzugsweise von 0,5-1 Mol-% Katalysator durchgeführt wird.

Für die Umsetzung wird zweckmässig Jod als Katalysator angewendet. Bevorzugt wird die Umsetzung in Gegenwart vön 0,5-1 Mol-% und insbesondere von 0,67 Mol-% Jod durchgeführt.

Das Herstellungsverfahren für das Phenothiazine enthaltende Stoffgemisch kann, unter Einhaltung der gegebenen Ausführungsmerkmale, in Gegenwart oder Abwesenheit eines Lösungsmittels durchgeführt werden. Die Menge des Lösungsmittels ist nicht kritisch und es können beispielsweise aromatische Kohlenwasserstoffe wie Toluol oder Xylol und/oder hochsiedende Paraffine, ferner Chlor- oder Nitrobenzol, Alkohole, beispielsweise aus der Reihe von Ethanol bis zu den Octanolen, und Dimethylformamid zur Anwendung gelangen.

Die Reaktionstemperatur liegt zwischen 80° und 250°C, bevorzugt wird eine Temperatur von 120-170°C. Während der Reaktion bildet sich Schwefelwasserstoff (H₂S). Dieses gasförmige Produkt ist bekanntermassen giftig und wird deshalb zweckmässig aus dem Reaktionssystem entfernt und beispielsweise durch eine wässrige Alkalihydroxidlösung geleitet. Dabei bildet sich das entsprechende Alkalisulfid, das der Entsorgung zugeführt werden kann.

Die Reaktionszeit kann beispielsweise zwischen 1 bis 15 Stunden betragen, wobei sich eine Reaktionszeit von 2 bis 4 h als zweckmässig und eine solche von ca. 3 h als bevorzugt erweist.

Die Reaktion kann derart ausgeführt werden, dass die Diphenylaminmischung gegebenenfalls gelöst im angegebenen Lösungsmittel, der Schwefel und der Katalysator vorgelegt werden. Unter Rühren erhitzt man das Gemisch auf die angegebene Temperatur. Der Ablauf der Reaktion ist an der Schwefelwasserstoffbildung erkennbar. Der Schwefelwasserstoff soll fortlaufend aus dem Reaktionssystem entfernt und vernichtet werden. Nach der angegebenen Zeit oder wenn mit einem geeigneten Analysenverfahren kein freier Schwefel mehr nachweisbar ist, kann die Reaktion beendet werden. Es ist dann vorteilhaft, den Ansatz abzukühlen und am Vakuum zu entgasen und gegebenenfalls das Lösungsmittel zu entfernen. Eine weitere Aufarbeitung ist in der Regel nicht notwendig.

Entsprechend der ursprünglich eingesetzten Schwefelmenge und der Menge Diphenylamine resultieren aus der Umsetzung ein Reaktionsgemisch enthaltend die entsprechenden Phenothiazine und, falls die Schwefelmenge entsprechend gering gehalten wurde, auch nicht umgesetzte Diphenylamine.

Stoffgemische, enthaltend die Phenothiazine und die Diphenylamine, wie schon beschrieben, sind besonders wertvoll, wobei die vorzugsweisen Mengenverhältnisse ebenfalls schon oben angegeben sind.

Das Gemisch von Diphenylamin-Verbindungen, von dem ausgegangen wird, enthält
- 1 bis 5 Gew.-%: a) Diphenylamin
- 8 bis 18 Gew.-%: b) 4-tert-Butyldiphenylamin
- 21 bis 31 Gew.-%: c) einer oder mehrerer der Verbindungen
i) 4-tert-Octyldiphenylamin
ii) 4,4'-Di-tert-butyldiphenylamin
iii) 2,4,4'-Tris-tert-butyldiphenylamin,
- 20 bis 31 Gew.-%: d) einer oder mehrerer der Verbindungen
i) 4-tert-Butyl-4'-tert-octyldiphenylamin
ii) 2,2'- oder 2,4'-Di-tert-octyldiphenylamin
iii) 2,4-Di-tert-butyl-4'-tert-octyldiphenylamin und
- 15 bis 29 Gew.-%: e) der Verbindung
i) 4,4'-Di-tert-octyldiphenylamin oder
der Verbindungen
i) 4,4'-Di-tert-octyldiphenylamin und
ii) 2,4-Di-tert-octyl-4'-tert-butyldiphenylamin.

Das Gemisch von Diphenylamin-Verbindungen wie oben beschrieben, ist beispielsweise erhältlich durch Reaktion von Diphenylamin mit Diisobutylen, wobei die Reaktion von Diphenylamin mit einem Ueberschuss an Diisobutylen in Anwesenheit eines aktiven Tonerde-Katalysators durchgeführt wird, die Konzentration an Diisobutylen über die Reaktionsdauer im wesentlichen konstant gehalten wird, die Reaktionstemperatur mindestens 160°C beträgt, die Reaktion solange durchgeführt wird bis der Gehalt an 4,4'-Di-tert.-octyldiphenylamin, bezogen auf die Reaktionsmasse ohne Katalysator, unter 30 Gew.-%, vorzugsweise unter 25 Gew.-%, und der Gehalt an Diphenylamin unter 10 Gew.-%, vorzugsweise unter 5 Gew.-% liegen, der Katalysator und nicht umgesetztes Diisobutylen entfernt werden und das entstehende flüssige Produkt isoliert wird.

Das Verfahren an sich ist ausführlich in der EP-A-0 149 422 beschrieben.

Ein Merkmal vorliegender Erfindung ist auch eine Zusammensetzung enthaltend organische, dem oxidativen thermischen oder actinischen Abbau unterworfene Materialien und ein Phenothiazine enthaltendes Stoffgemisch nach vorliegender Erfindung.

Beispielsweise enthalten die organischen Materialien 0,01 bis 10 Gew.-%, zweckmässig 0,05 bis 5 Gew.-%, vorzugsweise 0,05 bis 3 Gew.-%, und insbesondere 0,1 bis 2 Gew.-% des Stoffgemisches wie oben erwähnt.

Die organischen, einem oxidativen, thermischen oder actinischen Abbau unterworfenen Materialien können beispielsweise folgende Gruppen umfassen:
1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.
3a. Kohlenwasserstoffharze (z.B. C₅-C₉) inklusive hydrierte Modifikationen davon (z.B. Klebrigmacherharze).
4. Polystyrol, Poly-(p-methylstyrol), Poly-(α-methylstyrol).
5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.
7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, Polyacrylamide und Polyacrylnitrile.
9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
11. Homo- und Copolymere von cyclischen Ethern, wie Polyalkylenglykole, Polyethylenoxyd, Polypropylenoxyd oder deren Copolymere mit Bisglycidylethern.
12. Polyacetale, wie Polyoxymethylen, sowie solche Polyoxymethylene, die Comonomere, wie z.B. Ethylenoxid, enthalten; Polyacetale, die mit termoplastischen Polyurethanen, Acrylaten oder MBS modifiziert sind.
13. Polyphenylenoxide und -sulfide und deren Mischungen mit Styrolpolymeren oder Polyamiden.
14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
16. Polyharnstoffe, Polyimide, Polyamid-imide und Polybenzimidazole.
17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
18. Polycarbonate und Polyestercarbonate.
19. Polysulfone, Polyethersulfone und Polyetherketone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nicht-trocknende Alkydharze.
22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
23. Vernetzbare Acrylharze, die sich von substituierten Acrylsäureestern ableiten, wie z.B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z.B. von Bis-glycidylethern oder von cycloaliphatischen Diepoxiden.
26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.
28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als funktionelle Flüssigkeiten oder Spinnpräparationen, einschliesslich der wässrigen Emulsionen von Spinnpräparationen, Anwendung finden.
29. Wässrige Emulsionen natürlicher oder synthetischer Kautschuke, wie z.B. Naturkautschuk-Latex oder Latices von carboxylierten Styrol-Butadien-Copolymeren.

Von den genannten organischen Materialien sind die polymeren organischen Materialien zweckmässig und daraus werden die synthetischen Polymere bevorzugt. Insbesondere bevorzugt werden die Polyolefine und Elastomere.

Die polymeren organischen Materialien können zusätzlich andere Additive enthalten, die zugegeben werden, um die Eigenschaften von solchen Materialien noch weiter zu verbessern.

Beispiele dafür sind:
1. Antioxidantien
   1.1. Alkylierte Monophenole, z.B. 2,6-Di-tert.butylphenol, 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
   1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Di-phenyl-4-octadecyloxyphenol.
   1.3. Hydroxylierte Thiodiphenylether, z.B. 2,2′-Thio-bis-(6-tert.butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).
   1.4. Alkyliden-Bisphenole, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.-butylphenol), 4,4′-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Bis-(3-tert.butyl-4-hydroxy-5-methylphenyl)-dicyclopentadien, Bis-[2-(3′-tert.butyl-2′-hydroxy-5′-methylbenzyl)-6-tert.butyl-4-methylphenyl]-terephthalat.
   1.5. Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.
   1.6. Acylaminophenole, z.B. 4-Hydroxy-laurinsäureanilid, 4-Hydroxy-stearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.
   1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.
   1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Di-ethylenglycol, Triethylenglycol, Pentaerythrit, Tris-(hydroxy)ethyl-isocyanurat, N,N′-Bis-(hydroxyethyl)-oxalsäurediamid.
   1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.
   1.10. Amide der β-(3,5-Di-tert.butyl-4-hydroxyphenyl)-propionsäure, wie z.B. N,N′-Bis-(3,5-di-tert.butyl-4-hydroxyphenylpropionyl)-hexamethylendiamin, N,N′-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.
2. UV-Absorber und Lichtschutzmittel
   2.1. 2-(2′-Hydroxyphenyl)-benztriazole, wie z.B. das 5′-Methyl-, 3′,5′-Di-tert.butyl-, 5′-tert.Butyl-, 5′-(1,1,3,3-Tetramethylbutyl)-, 5-Chlor-3′,5′-di-tert.butyl-, 5-Chlor-3′-tert.butyl-5′-methyl-, 3′-sec.Butyl-5′-tert.butyl, 4′-Octoxy-, 3′,5′-Di-tert.amyl-, 3′,5′-Bis-(α,α-dimethylbenzyl)-Derivat.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2′,4′-Trihydroxy-, 2′-Hydroxy-4,4′-dimethoxy-Derivat.
   2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.
   2.4. Acrylate, wie z.B. α-Cyan-β,β-diphenyläcrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2′-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N′-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1′-(1,2-Ethandiyl)-bis-(3,3,5,5-tetramethyl-piperazinon).
   2.7. Oxalsäurediamide, wie z.B. 4,4′-Di-octyloxy-oxanilid, 2,2′-Di-octyloxy-5,5′-di-tert.butyl-oxanilid, 2,2′-Di-dodecyloxy-5,5′di-tert.butyl-oxanilid, 2-Ethoxy-2′-ethyl-oxanilid, N,N′-Bis-(3-dimethylaminopropyl)-oxalamid, 2-Ethoxy-5-tert.butyl-2′-ethyloxanilid und dessen Gemisch mit 2-Ethoxy-2′-ethyl-5,4′-di-tert.butyl-oxanilid, Gemische von o-und p-Methoxy- sowie von o- und p-Ethoxy-di-substituierten Oxaniliden.
3. Metalldesaktivatoren, wie z.B. N,N′-Diphenyloxalsäurediamid, N-Salicylal-N′-salicyloylhydrazin, N,N′-Bis-(salicyloyl)-hydrazin, N,N′-Bis-(3,5-di-tert.butyl-4-hydroxyphenylpropionyl)-hydrazin, 3-Salicyloyl-amino-1,2,4-triazol, Bis-(benzyliden)-oxalsäuredihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4′-biphenylen-diphosphonit, 3,9-Bis-(2,4-di-tert.butyl-phenoxy)-2,4,8,10-tetraoxa-3,9-diphosphaspiro[5.5]undecan.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrittetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.
8. Nukleierungsmittel, wie z.B. 4-tert.Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.
10. Sonstige Zusätze, wie z.B. Weichmacher, Gleitmittel, Emulgatoren, Pigmente, Optische Aufheller, Flammschutzmittel, Antistatika, Treibmittel.

Von den genannten organischen Materialien ist eine bevorzugte Gruppe diejenige der funktionellen Flüssigkeiten. Dazu gehören insbesondere die Schmierstoffe und Hydraulikflüssigkeiten.

Die in Frage kommenden Schmierstoffe sind beispielsweise mineralische oder synthetische Oele oder Mischungen davon. Die Schmierstoffe und auch Hydraulikflüssigkeiten sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek,"Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Der Schmierstoff kann ein Oel oder Fett sein, beispielsweise basierend auf einem Mineralöl. Die Mineralöle basieren insbesondere auf Kohlenwasserstoffverbindungen.

Beispiele von synthetischen Schmierstoffen umfassen Schmierstoffe auf der Basis der aliphatischen oder aromatischen Carboxylester, der polymeren Ester, der Polyalkylenoxide, der Phosphorsäureester, der Poly-d-olefine oder der Silicone, eines Diesters einer zweiwertigen Säure mit einem einwertigen Alkohol, wie z.B. Dioctylsebacat oder Dinonyladipat, eines Triesters von Trimethylolpropan mit einer einwertigen Säure oder mit einem Gemisch solcher Säuren, wie z.B. Trimethylolpropantripelargonat, Trimethylolpropan-tricaprylat oder Gemische davon, eines Tetraesters von Pentaerythrit mit einer einwertigen Säure oder mit einem Gemisch solcher Säure, wie z.B. Pentaerythrit-tetracaprylat, oder eines komplexen Esters von einwertigen und zweiwertigen Säuren mit mehrwertigen Alkoholen, z.B. ein komplexer Ester von Trimethylolpropan mit Capryl- und Sebacinsäure oder von einem Gemisch davon. Besonders geeignet sind neben Mineralölen z.B. Poly-α-Olefine, Schmierstoffe auf Esterbasis, Phosphate, Glykole, Polyglykole und Polyalkylenglykole, sowie deren Mischungen mit Wasser.

Besonders bevorzugt als Schmierstoffe sind die hydrierten Base Stock-Oele (hydro-treated base stock oils, hydrorefined oil).

Die Schmierstoffe und Hydraulikflüssigkeiten können zusätzlich andere Additive enthalten, die zugegeben werden, um die Grundeigenschaften derselben noch weiter zu verbessern. Dazu gehören weitere Antioxidantien, Metalldesaktivatoren, Rostinhibitoren, Viskositätsindex-Verbesserer, Stockpunkterniedriger, Dispergiermittel, Detergentien und Verschleissschutz-Additive.

Beispiele für zusätiliche Antioxidantien sind der oben angeführten Liste "1. Antioxidantien", Punkte 1.1. bis 1.10, zu entnehmen.

Darüber hinaus sind für die Schmierstoffe und Hydraulikflüssigkeiten weitere Additive zu nennen. Als weitere Additive sind beispielhaft aufzuzählen:

### Beispiele für aminische Antioxidantien:

N,N′-Di-isopropyl-p-phenylendiamin, N,N′-Di-sec-butyl-p-phenylendiamin, N,N′-Bis(1,4-dimethyl-pentyl)-p-phenylendiamin, N,N′-Bis(1-ethyl-3-methyl-pentyl)-p-phenylendiamin, N,N′-Bis(1-methyl-heptyl)-p-phenylendiamin, N,N′-Dicyclohexyl-p-phenylendiamin, N,N′-Diphenyl-p-phenylendiamin, N,N′-Di-(naphthyl-2)-p-phenylendiamin, N-Isopropyl-N′-phenyl-p-phenylendiamin, N-(1,3-Dimethyl-butyl)-N′-phenyl-p-phenylendiamin, N-(1-Methyl-heptyl)-N′-phenyl-p-phenylendiamin, N-Cyclohexyl-N′-phenyl-p-phenylendiamin, 4-(p-Toluol-sulfonamido)-diphenylamin, N,N′-Dimethyl-N,N′-di-sec-butyl-p-phenylendiamin, N-Allyldiphenylamin, 4-Isopropoxydiphenylamin, N-Phenyl-1-naphthylamin, N-Phenyl-2-naphthylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxy-phenyl)-amin, 2,6-Di-tert-butyl-4-dimethylamino-methyl-phenol, 2,4′-Di-amino-diphenylmethan, 4,4′-Diamino-diphenylmethan, N,N,N′,N′-Tetramethyl-4,4′-diamino-diphenylmethan, 1,2-Di-[(2-methyl-phenyl)-amino]-ethan, 1,2-Di-(phenylamino)-propan, (o-Tolyl)-biguanid, Di-[4-(1′,3′-dimethyl-butyl)-phenyl]amin, tert-octyliertes N-Phenyl-1-naphthylamin,
2,3-Dihydro-3,3-dimethyl-4H-1,4-benzothiazin, N-Allylphenothiazin

### Beispiele für weitere Antioxidantien:

Aliphatische oder aromatische Phosphite, Ester der Thiodipropionsäure oder der Thiodiessigsäure, oder Salze der Dithiocarbamid- oder Dithiophosphorsäure.

### Beispiele für Metall-Desaktivatoren, z.B. für Kupfer, sind:

Triazole, Benztriazole und deren Derivate, Tolutriazole und deren Derivate, 2-Mercaptobenzthiazol, 2-Mercaptobenztriazol, 2,5-Dimercaptobenztriazol, 2,5-Dimercaptobenzthiadiazol, 5,5′-Methylenbisbenztriazol, 4,5,6,7-Tetrahydrobenztriazol, Salicyliden-propylendiamin, Salicylaminoguanidin und dessen Salze.

### Beispiele für Rost-Inhibitoren sind:

a) Organische Säuren, ihre Ester, Metallsalze und Anhydride, z.B.: N-Oleoyl-sarcosin, Sorbitan-mono-oleat, Blei-naphthenat, Alkenylbernsteinsäureanhydrid, z.B. Dodecenylbernsteinsäure-anhydrid, Alkenylbernsteinsäure-Teilester und -Teilamide, 4-Nonylphenoxy-essigsäure.
b) Stickstoffhaltige Verbindungen, z.B.:
   I. Primäre, sekundäre oder tertiäre aliphatische oder cycloaliphatische Amine und Amin-Salze von organischen und anorganischen Säuren, z.B. öllösliche Alkylammoniumcarboxylate.
   II. Heterocyclische Verbindungen, z.B.: Substituierte Imidazoline und Oxazoline.
c) Phosphorhaltige Verbindungen, z.B.:
   Aminsalze von Phosphorsäurepartialestern oder Phosphonsäurepartialestern, Zinkdialkyldithiophosphate.
d) Schwefelhaltige Verbindungen, z.B.:
   Barium-dinonylnaphthalin-sulfonate, Calciumpetroleum-sulfonate.

### Beispiele für Viskositätsindex-Verbesserer sind:

Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.

### Beispiele für Stockpunkterniedriger sind:

Polymethacrylat, alkylierte Naphthalinderivate.

### Beispiele für Dispergiermittel/Detergentien sind:

Polybutenylbernsteinsäureamide oder -imide, Polybutenylphosphonsäurederivate, basische Magnesium-, Calcium-, und Bariumsulfonate und -phenolate.

### Beispiele für Verschleissschutz-Additive sind:

Schwefel und/oder Phosphor und/oder Halogen enthaltende Verbindungen, wie geschwefelte pflanzliche Oele, Zinkdialkyldithiophosphate, Tritolylphosphat, chlorierte Paraffine, Alkyl- und Aryldi- und tri-sulfide, Triphenylphosphorothionate, Diethanolaminomethyltolyltriazol, Di(2-ethylhexyl)aminomethyltolyltriazol.

Die vorliegende Erfindung umfasst auch Zusammensetzungen, enthaltend
a) ein organisches , dem oxidativen, thermischen oder actinischen Abbau unterworfenes Material, und b) ein Phenothiazine enthaltendes Stoffgemisch nach vorliegender Erfindung, wie bereits oben erwähnt.

Zweckmässig sind Zusammensetzungen, enthaltend
a) eine funktionelle Flüssigkeit aus der Reihe der Schmierstoffe und der Hydraulikflüssigkeiten oder ein polymeres organisches Material und
b) ein ein Phenothiazine enthaltendes Stoffgemisch nach vorliegender Erfindung.

Vorzugsweise enthält die Zusammensetzung
a) einen Schmierstoff aus der Reihe der Mineralöle, der synthetischen Oele oder einer Mischung davon und
b) ein Phenothiazine enthaltendes Stoffgemisch nach vorliegender Erfindung.

Besonders bevorzugt enthält die Zusammensetzüng
a) ein hydriertes Base Stock-Oel und
b) ein Phenothiazine enthaltendes Stoffgemisch nach vorliegender Erfindung.

Die vorliegende Zusammensetzung umfasst auch Zusammensetzurigen enthaltend
a) ein synthetisches Polymer und
b) ein Phenothiazine enthaltendes Stoffgemisch nach vorliegender Erfindung.

Zweckmässig sind auch Zusammensetzungen enthaltend
a) ein Polyolefin oder Elastomer und
b) ein Phenothiazine enthaltendes Stoffgemisch nach vorliegender Erfindung.

Die Verwendung der Phenothiazine enthaltenden Stoffgemische nach vorliegender Erfindung als Antioxidantien in organischen, dem oxidativen, thermischen oder actinischen Abbau unterworfenen Material wird ebenfalls durch diese Erfindung mitumfasst.

Die nachfolgenden Beispiele erläutern die Erfindung näher. Alle Angaben in Prozenten oder Teilen beziehen sich auf das Gewicht, sofern nicht anders angegeben.

### Beispiel 1: Herstellung der Mischung aus Diphenylaminen

169,2 g Diphenylamin und 33,8 g aktive Tonerde (Fulcat ® 22B von Laporte Industries) werden in ein mit Rührer und Temperaturfühler versehenes Reaktionsgefäss eingefüllt und auf 165°C erhitzt. Sobald das Gemisch genügend leichtflüssig ist, wird gerührt. Danach werden 196,4 g Diisobutylen nach und nach zudosiert, so dass die Temperatur des Reaktionsgemisches nicht unter 165°C absinkt. Die Zugabe dauert 5 Stunden bis zur Beendigung der Reaktion. Rückfluss beginnt sogleich nach Reaktionsbeginn. Heizen und Rühren wird bei 165°C weitergeführt unter häufiger Probenahme bis die gas-flüssigchromatographische Analyse einen Gehalt an 4,4′-Di-tert.-octyldiphenylamin von unter 25 Gew.-% ergibt (ohne Katalysator). Die Reaktionsmasse wird auf 60°C gekühlt und der Katalysator durch Vakuumfiltration entfernt. Das Filtrat wird in eine Destillationsapparatur übergeführt und unter Heizen und Rühren wird der Druck auf 2,6 kPa reduziert.
Während der Destillation lässt man die Aussentemperatur langsam auf 165°C steigen und hält sie über 2 Stunden konstant auf dieser Temperatur, während die Destillation zum Stillstand kommt. Es werden 300 g einer viskosen, dunklen Flüssigkeit (A) vom Flammpunkt 210°C erhalten.

Die Hauptkomponenten der Flüssigkeit sind: 3,2 % Diphenylamin, 13,2 % Mono-tert-butyldiphenylamine, 25,3 % Mono-tert-octyldiphenylamine und Di-tert-butyl-diphenylamine, 24,2 % Tert-butyl-t-octyldiphenylamine, 24,3 % Di-tert-octyldiphenylamine, 24,3 % Di-tert-octyldiphenylamine und weitere höher alkylierte Diphenylamine. Die Konzentration an 4,4'-Di-tert-octyldiphenylamin liegt bei 18,2 % und kleinen Mengen von Diphenylaminen mit teilweise modifizierten Seitenketten und Polymeren. Die genannten substituierten Diphenylamine sind Isomerenmischungen mit Ausnahme des 4,4'-Di-tert-octyl-Derivates.

### Beispiel 2: Herstellung des Stoffgemisches:

1125,6g (4 Mol) des nach Beispiel 1 erhältlichen Produktes (A)
32,1g (1 Mol) Schwefel und
3,4g (0,67 Mol-%) Jod werden vorgelegt und auf 165°C aufgeheizt. Die Reaktion springt sofort an, was an der H₂S-Entwicklung erkennbar ist. Das H₂S wird fortlaufend aufgefangen und zur Vernichtung durch eine wässrige NaOH-Lösung geleitet.

Nach ca. 2-3 Stunden bei 165°C ist im Dünnschichtchromatogramm kein Schwefel mehr erkennbar.

Der Ansatz wird auf 8°C abgekühlt und während 1 h bei 0,13 Pa am Hochvakuum entgast. Der Ansatz bedarf keiner weiteren Aufarbeitung und kann der ihm zugedachten Verwendung zugeführt werden.

Es resultieren 1134 g braunes klares Oel, das praktisch geruchsfrei ist. Die Analyse ergibt: C: 84,1%, H: 9,7%, N: 4,5%, S: 1,5% Molekulargewicht: 300-310.

### Beispiele 3-5:

Beispiel 2 wird wiederholt, wobei jedoch die Umsetzung mit unterschiedlichen Mengen an Schwefel durchgeführt wird.

| | Menge S eingesetzt | Schwefelgehalt im Endprodukt |
|---|---|---|
| Beispiel 3 | 72,7 g (2,26 Mol) | 3,4 % |
| Beispiel 4 | 126,3 g (3,9 Mol) | 5,9 % |
| Beispiel 5 | 203,3 g (6,3 Mol) | 9,5 % |

Beispiele 6+7: Es werden zwei verschiedene Basisoele mit einer bestimmten Menge Produkt aus Beispiel 2 versetzt und verschiedenen Standard-Test-verfahren unterzogen.

Die angewandten Testverfahren sind

### 1.) Der RoBOT Test (ASTM D-2272-85)

Der "Rotary Bomb Oxidation Test" (RoBOT) ist eine schnelle Screening-methode und wird zur Prüfung der Oxidationsstabilität von Motorenölen und Industrieschmierölen verwendet.

Die Prüfapparatur besteht aus einem stählernen zylindrischen Druckgefäss, das in einem auf 150°C aufgeheizten Wärmebad unter einem Winkel von 30° zur Horizontalen axial rotiert. 50 g des zu prüfenden Schmieröls und 5 g Wasser werden gemeinsam mit einer als Katalysator dienenden Kupferspirale in den Glaseinsatz der Stahlbombe gegeben und anschliessend bei Raumtemperatur ein Sauerstoffdruck von 620 kPa (90 psi) aufgepresst. Durch die Badtemperatur von 150°C erhöht sich der Sauerstoffdruck schnell auf knapp 1380 kPa (200 psi) und bleibt dann konstant, bis infolge einsetzender Oxidation auf dem kontinuierlich registrierenden Manometer ein Druckabfall zu verzeichnen ist.

Das Ende der Prüfung wird bei einem Druckabfall von 170 kPa (25 psi) erreicht. Als Prüfergebnis notiert man die Zeit, die bis zum Ende der Prüfung verstrichen ist.

### 2.) TOST-Test

Der "Turbine Oil Stability Test" (TOST) ist eine Langzeitprüpfung und wird zur Bestimmung des Alterungsverhaltens von wirkstoffhaltigen Dampfturbinen- und Hydraulikölen verwendet.

Die mit 60 ml destilliertem Wasser versetzte Schmierölprobe von 300 ml wird bei gleichzeitiger Gegenwart von Stahl- und Kupferdraht unter Einleitung von Sauerstoff bei 95°C gealtert. Durch die in Zeitabständen bestimmte Neutralisätionszahl wird die Alterung verfolgt. Das zu testende Oel wird im vorliegenden Fall während 1000 Stunden gealtert. Danach wird der Säurewert TAN (in mg KOH-Verbrauch pro g Testöl) sowie der Schlamm (SLUDGE)(in mg Rückstand pro Ansatz) bestimmt. Weiters wird der Wert für "TOST-Life" bestimmt. Dies ist der Endzustand, der in Stunden gemessen wird und bei dem eine Neutralisationszahl von 2,0 mg KOH/g Oel erreicht wird.

### Die Basisoele sind:

a) Mobil STOC K 305 (enthaltend 0,54 % S), dem 0,05 % eines handelsüblichen öllöslichen Korrosionsinhibitors auf Basis eines Alkenylbernsteinsäurehalbesters und 0,05% eines handelsüblichen öllöslichen Metalldesaktivators auf Basis eines Triazolderivates zugemischt wurden.
b) Exxon 1243 (enthaltend 0,19 % S), dem 0,05 % eines handelsüblichen öllöslichen Korrosionsinhibitors auf Basis eines Alkenylbernsteinsäurehalbesters zugemischt wurden.
c) Oel YI (Golf Petrol Canada) enthaltend 0,000 % S. Viskosität bei 40°C: 34,88 Cs. Es handelt sich dabei um ein sogenanntes "hydrorefined oil (hydriertes Base-Stock Oel)".

In den nachfolgenden Tabellen I und II sind die Messwerte festgehalten:

**Tabelle I**

| Beispiel | Basisoele | Additiv aus Beispiel 2(in % *) | RoBOT (min) | TOST (1000h) | | TOST (life) Stunden |
|---|---|---|---|---|---|---|
| | | | | TAN (mg KOH) | Sludge (mg) | |
| 6 | a) | 0,25 | 486 | 0,55 | 39 | 4750 |
| 7 | b) | 0,25 | 169 | 0,38 | 17 | 3200 |
| Vergleich | a) | - | 31 | >2 | >5000 | <60 |
| | b) | - | 29 | >2 | >5000 | <30 |

| | | | | | | |
|---|---|---|---|---|---|---|
| * bezogen auf das Basisoel | | | | | | |

**Tabelle II**

| Beispiel | Basisoel | Additiv aus Beispiel 2(in % *) | TOST (500h) | |
|---|---|---|---|---|
| | | | TAN (mg KOH) | Sludge (mg) |
| 8 | c) | 0,25 | ∼ 0 | 42 |
| Vergleich | c) | - | > 2 | > 1000 |

| | | | | |
|---|---|---|---|---|
| * bezogen auf das Basisoel | | | | |

## Patentansprüche

1. Phenothiazine enthaltendes Stoffgemisch erhältlich durch Umsetzen eines Gemisches von Diphenylamin-Verbindungen, wobei das Diphenylamin-Gemisch
1 bis 5 Gew.-% a) Diphenylamin
8 bis 18 Gew.-% b) 4-tert-Butyldiphenylamin
21 bis 31 Gew.-% c) einer oder mehrerer der Verbindungen
i) 4-tert-Octyldiphenylamin
ii) 4,4'-Di-tert-butyldiphenylamin
iii) 2,4,4'-Tris-tert-butyldiphenylamin,
20 bis 31 Gew.-% d) einer oder mehrerer der Verbindungen
i) 4-tert-Butyl-4'-tert-octyldiphenylamin
ii) 2,2'- oder 2,4'-Di-tert-octyldiphenylamin
iii) 2,4-Di-tert-butyl-4'-tert-octyldiphenylamin und
15 bis 29 Gew.-% e) der Verbindung
i) 4,4'-Di-tert-octyldiphenylamin oder
der Verbindungen
i) 4,4'-Di-tert-octyldiphenylamin und
ii) 2,4-Di-tert-octyl-4'-tert-butyldiphenylamin
enthält,
mit 1 bis 200 Mol-% elementarem Schwefel, in Gegenwart von 0,25 bis 5 Mol-% eines Kondensations-Katalysators aus der Reihe von Jod, Aluminiumbromid, Aluminiumchlorid, Eisen-III-chlorid, Antimonchlorid, Kupferjodid oder Schwefeljodid, bei Temperaturen von 80° bis 250°C.

2. Phenothiazine enthaltendes Stoffgemisch, erhältlich durch Reaktion von Diphenylamin mit Diisobutylen, wobei die Reaktion von Diphenylamin mit einem Ueberschuss an Diisobutylen in Anwesenheit eines aktiven Tonerdekatalysators durchgeführt wird, die Konzentration an Diisobutylen über die Reaktionsdauer im wesentlichen konstant gehalten wird, die Reaktionstemperatur mindestens 160°C beträgt, die Reaktion solange durchgeführt wird bis der Gehalt an 4,4'-Di-tert.-octyldipyhenylamin, bezogen auf die Reaktionsmasse ohne Katalysator, unter 30 Gew.-%, vorzugsweise unter 25 Gew.-% und der Gehalt an Diphenylamin unter 10 Gew.-%, vorzugsweise unter 5 Gew.-% liegen, der Katalysator und nicht umgesetztes Diisobutylen entfernt werden und das entstehende flüssige Produkt isoliert wird, und anschliessendes Umsetzen des flüssigen Produktes mit 1 bis 200 Mol-% elementarem Schwefel, in Gegenwart von 0,25 bis 5 Mol-% eines Kondensationskatalysators aus der Reihe Jod, Aluminiumbromid, Aluminiumchlorid, Eisen-III-chlorid, Antimonchlorid, Kupferjodid oder Schwefeljodid, bei Temperaturen von 80° bis 250°C.

3. Phenothiazine enthaltendes Stoffgemisch nach Anspruch 1 oder 2, erhältlich durch Umsetzung mit 5 bis 200, insbesondere 5 bis 150 Mol-% elementarem Schwefel.

4. Phenothiazine enthaltendes Stoffgemisch nach Anspruch 1 oder 2, erhältlich durch Umsetzung mit 180 bis 200 Mol-% elementarem Schwefel.

5. Phenothiazine enthaltendes Stoffgemisch nach Anspruch 1 oder 2, erhältlich durch Umsetzung mit 50 bis 100 Mol-% elementarem Schwefel.

6. Phenothiazine enthaltendes Stoffgegemisch nach Anspruch 1 oder 2, erhältlich durch Umsetzung mit 20 Mol-% elementarem Schwefel.

7. Zusammensetzung enthaltend
a) ein organisches, dem oxidativen, thermischen oder actinischen Abbau unterworfenes Material und
b) ein Phenothiazine enthaltendes Stoffgemisch nach Anspruch 1 oder 2.

8. Zusammensetzung nach Anspruch 7 enthaltend
a) einen Schmierstoff aus der Reihe der Mineralöle, der synthetischen Oele oder einer Mischung davon und
b) ein Phenothiazine enthaltendes Stoffgemisch nach Anspruch 1 oder 2.

9. Zusammensetzung nach Anspruch 7, enthaltend
a) ein synthetisches Polymer und
b) ein Phenothiazine enthaltendes Stoffgemisch nach Anspruch 1 oder 2.

10. Verfahren zur Herstellung eines Phenothiazine enthaltenden Stoffgemisches, dadurch gekennzeichnet, dass ein Gemisch von Diphenylamin-Verbindungen, wobei das Diphenylamin-Gemisch
1 bis 5 Gew.-% a) Diphenylamin
8 bis 18 Gew.-% b) 4-tert-Butyldiphenylamin
21 bis 31 Gew.-% c) einer oder mehrerer der Verbindungen
i) 4-tert-Octyldiphenylamin
ii) 4,4'-Di-tert-butyldiphenylamin
iii) 2,4,4'-Tris-tert-butyldiphenylamin,
20 bis 31 Gew.-% d) einer oder mehrerer der Verbindungen
i) 4-tert-Butyl-4'-tert-octyldiphenylamin
ii) 2,2'- oder 2,4'-Di-tert-octyldiphenylamin
iii) 2,4-Di-tert-butyl-4'-tert-octyldiphenylamin und
15 bis 29 Gew.-% e) der Verbindung
i) 4,4'-Di-tert-octyldiphenylamin oder der Verbindungen
i) 4,4'-Di-tert-octyldiphenylamin und
ii) 2,4-Di-tert-octyl-4'-tert-butyldiphenylamin
enthält,
mit 1 bis 200 Mol-% elementarem Schwefel, in Gegenwart von 0,25 bis 5 Mol-% eines Kondensations-Katalysators aus der Reihe von Jod, Aluminiumbromid, Aluminiumchlorid, Eisen-III-chlorid, Antimonchlorid, Kupferjodid oder Schwefeljodid, bei Temperaturen von 80° bis 250°C umgesetzt wird.

11. Verfahren nach Anspruch 10, dadurch gekennzeichnet, dass die Umsetzung mit 5 bis 200, insbesondere 5 bis 150 Mol-% elementarem Schwefel ausgeführt wird.

12. Verfahren nach Anspruch 10, dadurch gekennzeichnet, dass die Umsetzung in Gegenwart von 0,5-2 Mol-% Katalysator durchgeführt wird.

13. Verfahren nach Anspruch 10, dadurch gekennzeichnet, dass die Umsetzung mit Jod als Katalysator durchgeführt wird.

14. Verfahren nach Anspruch 10, dadurch gekennzeichnet, dass die Umsetzung mit 0,5-1 Mol-% Jod als Katalysator durchgeführt wird.

15. Verwendung des Phenothiazine enthaltenden Stoffgemisches nach einem der Ansprüche 1 oder 2 als Antioxidans in organischen, dem oxidativen, thermischen oder actinischen Abbau unterworfenen Materialien.

## Claims

1. A mixture comprising phenothiazines which is obtainable by reacting a mixture of diphenylamine compounds, the diphenylamine mixture containing
1 to 5 % by weight of a) diphenylamine
8 to 18 % by weight of b) 4-tert-butyldiphenylamine
21 to 31 % by weight of c) one or more of the compounds
i) 4-tert-octyldiphenylamine
ii) 4,4'-di-tert-butyldiphenylamine
iii) 2,4,4'-tris-tert-butyldiphenylamine
20 to 31 % by weight of d) one or more of the compounds
i) 4-tert-butyl-4'-tert-octyldiphenylamine
ii) 2,2'- or 2,4'-di-tert-octyldiphenylamine
iii) 2,4-di-tert-butyl-4'-tert-octyldiphenylamine,
and
15 to 29 % by weight of e) the compound
i) 4,4'-di-tert-octyldiphenylamine, or the compounds
i) 4,4'-di-tert-octyldiphenylamine and
ii) 2,4-di-tert-octyl-4'-tert-butyldiphenylamine,
with 1 to 200 mol % of elemental sulfur, in the presence of 0.25 to 5 mol % of a condensation catalyst from the series consisting of iodine, aluminium bromide, aluminium chloride, iron (III) chloride, antimony chloride, copper iodide or sulfur iodide, at temperatures from 80° to 250°C.

2. A mixture comprising phenothiazines which is obtainable by reacting diphenylamine with diisobutylene, which involves carrying out the reaction of diphenylamine with excess diisobutylene in the presence of an active alumina catalyst, keeping the concentration of diisobutylene substantially constant for the duration of the reaction, the reaction temperature being at least 160°C, carrying out the reaction until the content of 4,4'-di-tert-octyldiphenylamine, based on the reaction mass without catalyst, is below 30 % by weight, preferably below 25 % by weight, and the content of diphenylamine is below 10 % by weight, preferably below 5 % by weight, removing the catalyst and unreacted diisobutylene, isolating the resultant liquid product and subsequently reacting said product with 1 to 200 mol % of elemental sulfur in the presence of 0.25 to 5 mol % of a condensation catalyst from the series consisting of iodine, aluminium bromide, aluminium chloride, iron(III) chloride, antimony chloride, copper iodide or sulfur iodide, at temperatures from 80° to 250°C.

3. A mixture comprising phenothiazines according to claim 1 or 2, which is obtainable by reaction with 5 to 200 mol %, in particular 5 to 150 mol %, of elemental sulfur.

4. A mixture comprising phenothiazines according to claim 1 or 2, which is obtainable by reaction with 180 to 200 mol % of elemental sulfur.

5. A mixture comprising phenothiazines according to claim 1 or 2, which is obtainable by reaction with 50 to 100 mol % of elemental sulfur.

6. A mixture comprising phenothiazines according to claim 1 or 2, which is obtainable by reaction with 20 mol % of elemental sulfur.

7. A composition comprising
a) an organic material which is subject to degradation by oxidation, heat or exposure to actinic light, and
b) a mixture comprising phenothiazines according to claim 1 or 2.

8. A composition according to claim 7, comprising
a) a lubricant from the series of the mineral oils, synthetic oils or a mixture thereof, and
b) a mixture comprising phenothiazines according to claim 1 or 2.

9. A composition according to claim 7, comprising
a) a synthetic polymer, and
b) a mixture comprising phenothiazines according to claim 1 or 2.

10. A process for the preparation of a mixture comprising phenothiazines, which comprises reacting a mixture of diphenylamine compounds, the diphenylamine mixture containing
1 to 5 % by weight of a) diphenylamine
8 to 18 % by weight of b) 4-tert-butyldiphenylamine
21 to 31 % by weight of c) one or more of the compounds
i) 4-tert-octyldiphenylamine
ii) 4,4'-di-tert-butyldiphenylamine
iii) 2,4,4'-tris-tert-butyldiphenylamine
20 to 31 % by weight of d) one or more of the compounds
i) 4-tert-butyl-4'-tert-octyldiphenylamine
ii) 2,2'- or 2,4'-di-tert-octyldiphenylamine
iii) 2,4-di-tert-butyl-4'-tert-octyldiphenylamine
and
15 to 29 % by weight of e) the compound
i) 4,4'-di-tert-octyldiphenylamine, or the compounds
i) 4,4'-di-tert-octyldiphenylamine and
ii) 2,4-di-tert-octyl-4'-tert-butyldiphenylamine,
with 1 to 200 mol % of elemental sulfur, in the presence of 0.25 to 5 mol % of a condensation catalyst from the series consisting of iodine, aluminium bromide, aluminium chloride, iron(III) chloride, antimony chloride, copper iodide or sulfur iodide, at temperatures from 80° to 250°C.

11. A process according to claim 10, wherein the reaction is carried out with 5 to 200 mol %, in particular 5 to 150 mol %, of elemental sulfur.

12. A process according to claim 10, wherein the reaction is carried out in the presence of 0.5-2 mol % of catalyst.

13. A process according to claim 10, wherein the reaction is carried out with iodine as catalyst.

14. A process according to claim 10, wherein the reaction is carried out with 0.5-1 mol % of iodine as catalyst.

15. Use of a mixture comprising phenothiazines according to one of claims 1 and 2 as antioxidant in organic materials which are subject to degradation by oxidation, heat or exposure to actinic light.

## Revendications

1. Mélange de matières contenant des phénothiazines que l'on peut obtenir par réaction d'un mélange des composés de type de diphénylamine, le mélange à base de diphénylamines contenant
de 1 à 5 % en poids a) diphénylamine
de 8 à 18 % en poids b) 4-tert.-butyldiphénylamine
de 21 à 31 % en poids c) un ou plusieurs des composés
i) 4-tert-octyldiphénylamine
ii) 4,4'-di-tert-butyl-diphénylamine
iii) 2,4,4'-tris-tert-butyl-diphénylamine,
de 20 à 31 % en poids d) d'un ou plusieurs des composés
i) 4-tert-butyl-4'-tert-octyl-diphénylamine
ii) 2,2'- ou 2,4'-di-tert-octyl-diphénylamine
iii) 2,4-di-tert-butyl-4'-tert-octyldiphénylamine et
de 15 à 29 % en poids e) du composé
i) 4,4'-di-tert-octyldiphénylamine ou des composés
i) 4,4'-di-tert-octyldiphénylamine et
ii) 2,4-di-tert-octyl-4'-tert-butyldiphénylamine
avec 1 à 200 % en moles de soufre élémentaire, en présence de 0,25 à 5 % en moles d'un catalyseur de condensation pris dans la série comportant l'iode, le bromure d'aluminium, le chlorure d'aluminium, le chlorure de fer(III), le chlorure d'antimoine, l'iodure de cuivre ou l'iodure de soufre, à des températures de 80 à 250 °C.

2. Mélange de matières contenant les phénothiazines que l'on peut obtenir par réaction de la diphénylamine avec le diisobutylène, la réaction de la diphénylamine avec un excès en diisobutylène étant mise en oeuvre en présence d'un catalyseur à base d'alumine active, tout en maintenant essentiellement constante pendant la durée de la réaction la concentration en diisobutylène, la température de réaction étant d'au moins 160 °C, en mettant en oeuvre la réaction jusqu'à ce que la teneur en 4,4'-di-tert-octyldiphénylamine, par rapport à la masse réactionnelle sans catalyseur, soit inférieure à 30 % en poids, de préférence inférieure à 25 % en poids, et la teneur en diphénylamine inférieure à 10 % en poids, de préférence inférieure à 5 % en poids, en éliminant le catalyseur et le diisobutylène n'ayant pas réagi et en isolant le produit liquide obtenu et ensuite en faisant réagir le produit liquide avec 1 à 200 % en modes de soufre élémentaire, en présence de 0,25 à 5 % en modes d'un catalyseur de condensation pris dans la série comportant l'iode, le bromure d'aluminium, le chlorure d'aluminium, le chlorure de fer(III), le chlorure d'antimoine, l'iodure de cuivre ou l'iodure de soufre, a des températures de 80 à 250 °C.

3. Mélange de matières contenant les phénothiazines selon la revendication 1 ou 2, que l'on peut obtenir par réaction avec 5 à 200, de préférence avec 5 à 150 % en modes de soufre élémentaire.

4. Mélange de matières contenant des phénothiazines selon la revendication 1 ou 2, que l'on peut obtenir par réaction avec 180 à 200 % en modes de soufre élémentaire.

5. Mélange de matières contenant les phénothiazines selon la revendication 1 ou 2, que l'on peut obtenir par réaction avec 50 à 100 % en moles de soufre élémentaire.

6. Mélange de matières contenant les phénothiazines selon la revendication 1 ou 2, que l'on peut obtenir par réaction avec 20 % en moles de soufre élémentaire.

7. Composition contenant
a) une matière organique soumise à la dégradation par oxydation, par la chaleur ou actinique et
b) un mélange de matières contenant des phénothiazines selon la revendication 1 ou 2.

8. Composition selon la revendication 7 contenant
a) un lubrifiant pris dans la série des huiles minérales, des huiles synthétiques ou leurs mélanges et
b) un mélange de matières contenant des phénothiazines selon la revendication 1 ou 2.

9. Composition selon la revendication 7, contenant
a) un polymère synthétique et
b) un mélange de matières contenant des phénothiazines selon la revendication 1 ou 2.

10. Procédé pour la préparation d'un mélange de matières contenant des phénothiazines, caractérisé en ce qu'il contient un mélange de composés de diphénylamines, le mélange de diphénylamines contenant
de 1 à 5 % en poids a) diphénylamine
de 8 à 18 % en poids b) 4-tert.-butyldiphénylamine
de 21 à 31 % en poids c) un ou plusieurs des composés
i) 4-tert-octyldiphénylamine
ii) 4,4'-di-tert-butyl-diphénylamine
iii) 2,4,4'-tris-tert-butyl-diphénylamine,
de 20 à 31 % en poids d) un ou plusieurs des composés
i) 4-tert-butyl-4'-tert-octyl-diphénylamine
ii) 2,2'- ou 2,4'-di-tert-octyl-diphénylamine
iii) 2,4-di-tert-butyl-4'-tert-octyldiphénylamine et
de 15 à 29 % en poids e) du composé
i) 4,4'-di-tert-octyldiphénylamine ou des composés
i) 4,4'-di-tert-octyldiphénylamine et
ii) 2,4-di-tert-octyl-4'-tert-butyldiphénylamine
avec 1 à 200 % en modes de soufre élémentaire, en présence de 0,25 à 5 % en modes d'un catalyseur de condensation pris dans la série comportant l'iode, le bromure d'aluminium, le chlorure d'aluminium, le chlorure de fer(III), le chlorure d'antimoine, l'iodure de cuivre ou l'iodure de soufre, à des températures de 80 à 250 °C.

11. Procédé selon la revendication 10, caractérisé en ce qu'on met en oeuvre la réaction avec 5 à 200, de préférence avec 5 à 150 % en modes de soufre élémentaire.

12. Procédé selon la revendication 10, caractérisé en ce qu'on met en oeuvre la réaction en présence de 0,5 à 2 % en modes de catalyseur.

13. Procédé selon la revendication 10, caractérisé en ce qu'on met en oeuvre la réaction avec l'iode en tant que catalyseur.

14. Procédé selon la revendication 10 caractérisé en ce qu'on met en oeuvre la réaction avec 0,5 à 1 % en moles d'iode en tant que catalyseur.

15. Utilisation du mélange de matières contenant des phénothiazines selon l'une des revendications 1 ou 2 en tant qu'anti-oxydant dans des matières organiques soumises à la dégradation par oxydation, par la chaleur ou actinique.
